# FASCICULE DE BREVET EUROPEEN

(11) **EP 2 925 431 B1**
(45) Date de publication et mention de la délivrance du brevet: **27.02.2019**
(21) Numéro de dépôt: 13799277.2
(22) Date de dépôt: 29.11.2013
(51) Int. Cl.: B01J 20/10, B01J 20/28, C03C 11/00, C03C 23/00, C03C 3/06, C03C 25/66, B01J 20/30

(54) **PROCÉDÉ POUR PRÉPARER UN VERRE À POROSITÉ BIMODALE, EVENTUELLEMENT FONCTIONNALISÉ ET LEDIT VERRE**
VERFAHREN ZUR HERSTELLUNG EINES OPTIONAL FUNKTIONALISIERTEN GLASES MIT BIMODALER POROSITÄT UND BESAGTES GLAS
METHOD FOR PREPARING AN OPTIONALLY FUNCTIONALISED GLASS HAVING BIMODAL POROSITY, AND SAID GLASS

(30) Priorité: 30.11.2012 FR 1261479
(43) Date de publication de la demande: 07.10.2015
(73) Titulaire: Commissariat à l'Énergie Atomique et aux Énergies Alternatives, 75015 Paris (FR); Université Montpellier 2, Sciences et Techniques, 34095 Montpellier Cedex 5 (FR); Centre National de la Recherche Scientifique (C.N.R.S.), 75794 Paris Cedex 16 (FR)
(72) Inventeur: GUILLOT, Marie, F-71880 Chatenoy Le Royal (FR); GOETTMANN, Frédéric, F-30133 Les Angles (FR); DELCHET, Carole, F-30200 Saint Nazaire (FR); EL MOURABIT, Sabah, F-84700 Sorgues (FR); GRANDJEAN, Agnès, F-30330 Saint Marcel De Careiret (FR)
(74) Mandataire: Brevalex
(86) Numéro de dépôt international: PCT/EP2013/075105
(87) Numéro de publication internationale: WO 2014/083162

(56) Documents cités:
- WO-A1-95/03256
- WO-A1-2014/081504
- WO-A2-2010/133689
- DE-A1-102009 028 490
- US-A1- 2002 070 168
- JÉRÔME BABIN ET AL: "MCM-41 silica monoliths with independent control of meso- and macroporosity", NEW JOURNAL OF CHEMISTRY, vol. 31, no. 11, 1 janvier 2007 (2007-01-01), page 1907, XP055082843, ISSN: 1144-0546, DOI: 10.1039/b711544j
- BRUNEL D: "Functionalized micelle-templated silicas (MTS) and their use as catalysts for fine chemicals", MICROPOROUS AND MESOPOROUS MATERIALS, ELSEVIER SCIENCE PUBLISHING, NEW YORK, US, vol. 27, no. 2-3, 1 février 1999 (1999-02-01), pages 329-344, XP004163645, ISSN: 1387-1811, DOI: 10.1016/S1387-1811(98)00266-2
- CHARNAY C ET AL: "Inclusion of ibuprofen in mesoporous templated silica: drug loading and release property", EUROPEAN JOURNAL OF PHARMACEUTICS AND BIOPHARMACEUTICS, ELSEVIER SCIENCE PUBLISHERS B.V., AMSTERDAM, NL, vol. 57, no. 3, 1 mai 2004 (2004-05-01), pages 533-540, XP004503711, ISSN: 0939-6411, DOI: 10.1016/J.EJPB.2003.12.007
- ALAIN WALCARIUS ET AL: "Mesoporous organosilica adsorbents: nanoengineered materials for removal of organic and inorganic pollutants", JOURNAL OF MATERIALS CHEMISTRY, vol. 20, no. 22, 1 janvier 2010 (2010-01-01), page 4478, XP055083054, ISSN: 0959-9428, DOI: 10.1039/b924316j
- MARTIN T ET AL: "MORPHOLOGICAL CONTROL OF MCM-41 BY PSEUDOMORPHIC SYNTHESIS", ANGEWANDTE CHEMIE. INTERNATIONAL EDITION, WILEY VCH VERLAG, WEINHEIM, vol. 41, no. 14, 15 juillet 2002 (2002-07-15), pages 2590-2592, XP001117138, ISSN: 1433-7851, DOI: 10.1002/1521-3773(20020715)41:14<2590::AID -ANIE2590>3.0.CO;2-3 cité dans la demande
- GALARNEAU A ET AL: "CONTROLLING THE MORPHOLOGY OF MESOSTRUCTURED SILICAS BY PSEUDOMORPHIC TRANSFORMATION: A ROUTE TOWARDS APPLICATIONS", ADVANCED FUNCTIONAL MATERIALS, WILEY - V C H VERLAG GMBH & CO. KGAA, DE, vol. 16, no. 13, 5 septembre 2006 (2006-09-05), pages 1657-1667, XP001244987, ISSN: 1616-301X, DOI: 10.1002/ADFM.200500825 cité dans la demande
- ALEXANDRA INAYAT ET AL: "Silica monoliths with hierarchical porosity obtained from porous glasses", CHEMICAL SOCIETY REVIEWS, vol. 42, no. 9, 1 janvier 2013 (2013-01-01), page 3753, XP055082864, ISSN: 0306-0012, DOI: 10.1039/c2cs35304k
- HANS UHLIG ET AL: "Transformation of porous glasses into MCM-41 containing geometric bodies", MICROPOROUS AND MESOPOROUS MATERIALS, vol. 182, 1 décembre 2013 (2013-12-01), pages 136-146, XP055082872, ISSN: 1387-1811, DOI: 10.1016/j.micromeso.2013.08.035
- KRESGE C T ET AL: "ORDERED MESOPOROUS MOLECULAR SIEVES SYNTHESIZED BY A LIQUID-CRYSTAL TEMPLATE MECHANISM", NATURE, MACMILLAN JOURNALS LTD, LONDON, GB, vol. 359, no. 6397, 22 October 1992 (1992-10-22), pages 710-712, XP000573992, ISSN: 0028-0836, DOI: 10.1038/359710A0
- BECK J S ET AL: "A NEW FAMILY OF MESOPOROUS MOLECULAR SIEVES PREPARED WITH LIQUID CRYSTAL TEMPLATES", JOURNAL OF THE AMERICAN CHEMICAL SOCIETY, AMERICAN CHEMICAL SOCIETY, US, vol. 114, no. 27, 1 January 1992 (1992-01-01), pages 10834-10843, XP000560268, ISSN: 0002-7863, DOI: 10.1021/JA00053A020
- Duncan Kilburn ET AL: "Monolayer sorption of neon in mesoporous silica glass as monitored by WAXS", , 29 January 2008 (2008-01-29), XP055161357, DOI: 10.1103/PhysRevE.77.021603 Retrieved from the Internet: URL:http://arxiv.org/abs/0801.4577
- BENOIT COASNE ET AL: "Gas Adsorption in Mesoporous Micelle-Templated Silicas:? MCM-41, MCM-48, and SBA-15", LANGMUIR, vol. 22, no. 26, 1 December 2006 (2006-12-01), pages 11097-11105, XP055082968, ISSN: 0743-7463, DOI: 10.1021/la061728h

## Description

### DOMAINE TECHNIQUE

La présente invention appartient au domaine des verres poreux utiles pour de nombreuses applications telles que la catalyse, la cosmétologie, la médecine, la décontamination, l'extraction liquide-solide et la détection chimique.

Plus particulièrement, la présente invention propose un procédé permettant de préparer un verre à porosité bimodale (porosité macroporeuse et mésoporeuse) en mettant en oeuvre une transformation pseudomorphe. La présente invention concerne également le verre à porosité bimodale ainsi préparé et ses utilisations notamment dans la catalyse, la cosmétologie, la médecine, la décontamination, l'extraction liquide-solide ou la détection chimique.

### ÉTAT DE LA TECHNIQUE ANTÉRIEURE

L'extraction liquide-solide est basée sur le même principe que l'extraction liquide-liquide à ceci près que les molécules qui captent les solutés sont greffées ou adsorbées sur une phase solide. Les principaux supports solides utilisés actuellement sont les résines échangeuses d'ions et les supports inorganiques tels que les silices, l'alumine, les oxydes de titane ou de zirconium.

Ces deux types de support sont très largement employés à l'échelle industrielle, mais présentent quelques inconvénients.

En effet, les résines échangeuses d'ions présentent des problèmes de réactivité (explosion) lorsqu'elles sont employées en présence d'acide nitrique **[1]**. Par ailleurs, lorsqu'elles sont utilisées pour piéger des éléments radioactifs, elles peuvent se dégrader rapidement sous l'effet de la radiolyse **[2]**. Enfin pour une utilisation en lit fluidisé, leur faible densité pose problème.

De même, les supports inorganiques sous forme de poudre présentent souvent des tailles de grains trop faibles pour pouvoir être mis en oeuvre dans un procédé de séparation en colonne notamment à cause d'une perte de charge trop importante. De plus, de tels supports présentent des surfaces d'échange certes importantes mais parfois peu accessibles.

Ces problèmes pourraient se trouver grandement améliorés si le matériau employé présentait une porosité bimodale, à savoir une macroporosité assurant un transfert de charge satisfaisant et une mésoporosité supportée à la surface de la macroporosité assurant l'accès à une grande surface spécifique et donc un taux de charge en molécules extractantes suffisant.

Aujourd'hui la synthèse la plus courante d'oxydes à porosité bimodale s'appuie sur le phénomène de décomposition spinodale **[3]**. Cette approche a été industrialisée pour la production de colonnes de chromatographie liquide haute performance (HPLC), notamment par la société Merk sous l'appellation commerciale chromolith®.

La demande de brevet US 2007/065356 décrit un procédé pour la préparation de moulages poreux monolithiques à partir d'un moule de gélification notamment réalisé à partir de verre ou de silice fondue **[4]**. Dans ce procédé, le moule de gélification est, tout d'abord, activé par gravure de surface et/ou par augmentation de l'aire de surface en utilisant des tétraalcoxysilanes et/ou des organoalcoxysilanes et/ou par modification chimique en utilisant des silanes bifonctionnels ou des alcoxysilanes particuliers. Le moule de gélification ainsi activé est ensuite rempli d'un sol monomère comprenant des particules de silice et/ou des fibres de verre(-céramique) et/ou des organoalcoxysilanes. Puis le sol monomère est polymérisé et le gel résultant est vieilli afin que des pores soient formés.

Cependant, ces synthèses sont assez difficiles à contrôler à l'échelle industrielle et les monolithes résultants restent très chers. Les inventeurs se sont donc fixés pour but de proposer un procédé permettant de préparer un matériau à porosité bimodale facile à mettre en oeuvre et économique pour une application industrielle quant à la préparation d'un matériau pour l'extraction liquide-solide.

En parallèle, la demande de brevet US 2010/055000 propose des particules de silice, sphériques, totalement poreuses et hybrides organiques/inorganiques, ces dernières étant utiles dans des dispositifs de séparation **[5]**. Les particules sont préparées à partir de particules d'oxyde métallique (silice, alumine, zircone ou dioxyde de titane) poreuses en présence d'un ou plusieurs tensioactifs et agents gonflants et éventuellement d'un alcoxyde métallique organique, et ce via une transformation pseudomorphe. Les particules ainsi obtenues présentent des pores ordonnés dont la distribution de la taille porale moyenne est étroite, notamment comprise entre 1,5 et 100 nm.

De même, l'équipe d'Anne Galarneau a proposé, ces dernières années, des techniques de synthèse pseudomorphe utilisant des tensioactifs permettant d'obtenir des matériaux mésoporeux stables avec une distribution de la taille porale restreinte pour des applications potentielles en chromatographie ou en catalyse **[6-7]**. Dans les travaux présentés dans ces deux articles, le matériau de départ est un précurseur amorphe à base de silice tel que les sphères de gel de silice commercialisées par Merck sous l'appellation commerciale Lichrosphere 100® **[6]** ou les autres matériaux listés dans le Tableau 1 de **[7]**.

A noter que des tests de transformation pseudomorphe réalisés sur des fibres de verre n'ont pas donné de résultats concluants puisque les fibres de verre ne parviennent pas à accommoder le gonflement induit par l'incorporation du tensioactif utilisé lors de cette transformation pseudomorphe, ce qui se traduit par un éclatement des fibres de verre **[8]**.

### EXPOSÉ DE L'INVENTION

La présente invention permet de résoudre des problèmes techniques et inconvénients précédemment listés des matériaux et procédés de l'art antérieur. En effet, les inventeurs ont mis au point un protocole permettant de préparer un matériau à porosité bimodale (macroporeuse et mésoporeuse) avec un nombre d'étapes et un coût raisonnables permettant d'envisager une application industrielle pour un tel protocole.

Plus particulièrement, les inventeurs ont choisi de convertir un verre macroporeux déjà utilisé avec succès en extraction solide-liquide en matériau mésoporeux par une conversion pseudomorphe.

En effet, des résultats obtenus par les inventeurs, il apparaît que, contrairement aux voies de synthèses classiques de silices mésoporeuses, l'approche pseudomorphe permet, certes, d'obtenir une porosité organisée et contrôlée, mais également de maîtriser la mise en forme macroscopique initiale des silices afin de faciliter leur mise en oeuvre (par exemple dans des procédés de catalyse ou d'extraction).

Si l'approche pseudomorphe précédemment évoquée a déjà été employée avec succès pour la préparation de matériaux mésoporeux à base de silice pure, il est tout à fait surprenant que, d'une part, cette synthèse puisse s'étendre à des compositions verrières et, que d'autre part, elle puisse permettre de produire un matériau à porosité bimodale en s'appliquant à des matériaux présentant une macroporosité préexistante. Le caractère surprenant vient notamment des données jusqu'alors disponibles quant à la mise en oeuvre d'une synthèse pseudomorphe sur des matériaux verriers **[8]**.

Ainsi, la présente invention concerne un procédé pour préparer un verre à porosité bimodale, macroporeuse et mésoporeuse, consistant à soumettre à une transformation pseudomorphe un verre macroporeux.

Les définitions données dans les documents **[5-7]** quant à la transformation pseudomorphe et trouvant une origine en minéralogie s'appliquent à la présente invention. Par conséquent, on entend par « transformation pseudomorphe » ou « synthèse pseudomorphe » un procédé dans lequel le verre macroporeux de départ mis en présence d'un tensioactif est partiellement dissout en surface et en profondeur (au sens où la surface interne du matériau est partiellement dissoute également) et reprécipite immédiatement aussi bien en surface qu'en profondeur dans les espaces interstitiels des micelles moyennant quoi des pores ayant pour gabarit les micelles sont formés dans le verre avec une structure porale régulière et, dans certains modes de réalisation, ordonnée. Ainsi, le verre obtenu après mise en oeuvre d'une transformation pseudomorphe présente une taille et une morphologie similaires à celles du verre de départ, les deux verres se distinguant essentiellement au niveau des pores avec uniquement présence de macropores pour le verre de départ et présence à la fois de macropores et de mésopores pour le verre obtenu après mise en oeuvre d'une transformation pseudomorphe. La présence de cette mésoporosité implique que le verre traité par voie pseudomorphe présente une surface spécifique très supérieure au verre de départ ce qui est particulièrement avantageux pour les applications visées.

Tout verre macroporeux commercial ou de synthèse est utilisable dans le cadre de la présente invention.

Par « verre », on entend un solide amorphe présentant une transition vitreuse et composé de silice ou oxyde de silicium (SiO₂) et éventuellement d'un ou plusieurs autres éléments, identiques ou différents. A titre d'exemples, d'autres éléments que peut contenir le verre mis en oeuvre dans le cadre de la présente invention, on peut citer de l'aluminium, du bore, du vanadium, du phosphore, du calcium, du magnésium, du sodium, du lithium, du potassium ou un de leurs mélanges. Un verre peut comprendre, éventuellement en plus d'un élément tel que précédemment défini, au moins un dopant notamment tel que du sélénium, du soufre, du germanium, de l'arsénic, du fer, du titane, du nickel, du zinc, du manganèse, du cuivre, de l'étain, du cobalt, de l'antimoine, de l'argent, de l'or ou un de leurs mélanges.

Par « verre poreux », on entend un verre dont la densité est inférieure à la densité théorique du verre non poreux, cette différence de densité d'au moins 5% étant la conséquence de pores ou vides présents au niveau du verre poreux. La porosité du verre peut être obtenue par des mesures d'adsorption/desorption d'azote ou par porosimétrie par intrusion de mercure bien connues de l'homme du métier. En particulier, la porosité du verre macroporeux utilisé dans l'invention peut être de 5 à 50% et notamment de 10 à 30% en volume total du verre.

Par « verre macroporeux », on entend un verre dont les pores ou vides qu'il comprend sont majoritairement des macropores. Par « macropores », on entend des pores ou vides présentant un diamètre moyen supérieur à 50 nm et notamment supérieur à 70 nm. Avantageusement, le verre macroporeux mis en oeuvre dans le cadre de la présente invention comprend moins de 10% et notamment moins de 5% de mésopores et/ou de micropores, ledit pourcentage étant exprimé en volume par rapport au volume de la porosité totale du verre.

Dans une 1^{ère} variante, le verre macroporeux mis en oeuvre dans le cadre de la présente invention ne comprend ni micropore, ni mésopore ou, s'il en comprend, ces micropores ou ces mésopores sont en une quantité négligeable vis-à-vis des macropores de ce verre. Par « quantité négligeable », on entend moins de 1% et notamment moins de 0,1% de mésopores et/ou de micropores, ledit pourcentage étant exprimé en volume par rapport au volume de la porosité totale du verre.

Dans une 2^{nde} variante, le verre macroporeux mis en oeuvre dans le cadre de la présente invention présente des macropores et, dans une quantité moindre, des mésopores. Par « quantité moindre », on entend une quantité de mésopores et/ou de micropores comprise entre 1% et 10%, ledit pourcentage étant exprimé en volume par rapport au volume de la porosité totale du verre. La mise en oeuvre d'un procédé selon l'invention i.e. d'un traitement pseudomorphe permet d'augmenter la mésoporosité du verre à porosité bimodale traité lorsque comparé au verre de départ et éventuellement de réorganiser cette mésoporosité, notamment lorsque la mésoporosité du verre de départ est mal définie.

Dans le verre macroporeux mis en oeuvre dans le cadre de la présente invention, les macropores sont avantageusement régulièrement répartis dans l'ensemble du verre. Dans le verre macroporeux mis en oeuvre dans le cadre de la présente invention, les macropores peuvent être reliés entre eux ou isolés les uns des autres. Avantageusement, le verre macroporeux mis en oeuvre dans le cadre de la présente invention présente une porosité ouverte i.e. la majorité des macropores de ce verre sont reliés entre eux.

Le verre macroporeux mis en oeuvre dans le cadre de la présente invention peut présenter des tailles et formes variées. Il peut se présenter sous forme de billes, de particules, de microparticules, de nanoparticules, de fibres, de monolithes, de tubes ou de plaques. L'homme du métier saura déterminer la taille et la forme les mieux adaptées en fonction de l'application envisagée pour le verre mésoporeux et macroporeux préparé. Dans un mode de réalisation particulier, le verre macroporeux mis en oeuvre se présente sous forme de particules du type poudre présentant une granulométrie contrôlée, comprise entre 1 µm et 10 mm et notamment entre 10 µm et 1 mm. Dans ce mode de réalisation particulier, le verre macroporeux présente une surface spécifique BET comprise entre 5 et 500 m²/g et notamment entre 10 et 50 m²/g.

Le verre macroporeux mis en oeuvre dans le cadre de la présente invention peut être un verre macroporeux commercial ou un verre macroporeux préparé, préalablement au procédé de l'invention, par toute technique connue de l'homme du métier impliquant notamment l'utilisation d'un (ou plusieurs) agent(s) porogène(s), d'une (ou plusieurs) attaque(s) chimique(s) acide(s) et/ou basique(s) et/ou d'un (ou plusieurs) traitement(s) thermique(s). La macroporosité du verre mis en oeuvre dans le cadre de la présente invention est la conséquence d'une démixion contrôlée suivie d'une attaque chimique.

Comme précédemment expliqué, le verre à porosité bimodale, macroporeuse et mésoporeuse, préparé par le procédé de l'invention présente une macroporosité correspondant à celle du matériau verrier macroporeux de départ i.e. présente des pores dont le diamètre moyen est supérieur à 50 nm et notamment supérieur à 70 nm et une mésoporosité, conséquence de la mise en oeuvre du procédé. Ainsi, le verre à porosité bimodale présente des mésopores dont le diamètre moyen est compris entre 2 et 50 nm et notamment entre 2 et 20 nm. Avantageusement, les mésopores du matériau à porosité bimodale obtenu par mise en oeuvre du procédé de l'invention se trouvent dans la couche à la surface (i.e. au niveau de la paroi) des macropores.

Plus particulièrement, le procédé selon la présente invention comprend les étapes suivantes consistant à :
a) préparer une solution alcaline comprenant au moins un tensioactif et ledit verre macroporeux;
b) soumettre la solution préparée à l'étape (a) à un traitement thermique permettant la transformation pseudomorphe dudit matériau macroporeux ;
c) récupérer le verre traité obtenu à l'étape (b) et rendre accessible la porosité bimodale, mésoporeuse et macroporeuse dudit verre.

L'étape (a) du procédé selon l'invention consiste donc à préparer une solution alcaline contenant au moins un tensioactif et le verre macroporeux.

Par « solution alcaline », on entend une solution dont le pH est supérieur à 10, notamment supérieur à 11 et, en particulier, supérieur à 12. La solution de l'étape (a) est de préférence tamponnée à un pH basique généralement supérieur à 10, notamment supérieur à 11 et, en particulier, supérieur à 12. La base employée pour réaliser cette solution peut être choisie parmi différents sels tels que l'hydroxyde de sodium, le carbonate de sodium, l'hydroxyde de lithium, le carbonate de lithium, l'hydroxyde de potassium, le carbonate de potassium, l'hydroxyde d'ammonium, le carbonate d'ammonium ou un de leurs mélanges.

Le choix de la concentration de la base et du volume de la solution de l'étape (a) est fait en fonction de la quantité de verre à traiter. L'homme du métier saura faire un choix pertinent en tenant compte du critère de pH précédemment évoqué et du principe qu'il ne faut, en aucun cas, aboutir à une dissolution complète du verre. A cet effet, le rapport molaire Base/SiO₂ est avantageusement inférieur à 4, notamment inférieur à 1 et, en particulier, inférieur à 0,5.

A titre d'exemple, l'hydroxyde de sodium peut être présent dans la solution de l'étape (a) en une quantité comprise entre 10 mM et 5 M, notamment entre 0,1 M et 1 M et, en particulier, de l'ordre de 0,7 M (i.e. 0,7 M ± 0,1 M).

Le solvant de la solution alcaline préparée à l'étape (a) est avantageusement de l'eau éventuellement en mélange avec un alcool simple, tel que du méthanol, de l'éthanol ou un de leurs mélanges. L'eau utilisée peut être de l'eau de distribution, de l'eau désionisée, de l'eau distillée, basiques ou non.

Par « tensioactif », on entend une molécule comportant une partie lipophile (apolaire) et une partie hydrophile (polaire). Avantageusement, ledit au moins un tensioactif présent dans la solution préparée à l'étape (a) du procédé de l'invention est choisi parmi les tensioactifs anioniques, les tensioactifs cationiques, les tensioactifs zwittérioniques, les tensioactifs amphotères et les tensioactifs non-ioniques. La solution préparée à l'étape (a) du procédé peut comprendre plusieurs tensioactifs appartenant à une même famille de tensioactifs précédemment listée (i.e. anionique, cationique, zwittérionique ou amphotère) ou plusieurs tensioactifs appartenant à au moins deux de ces familles de tensioactifs distinctes.

Pour rappel, les tensioactifs anioniques sont des tensioactifs dont la partie hydrophile est chargée négativement tels que les alkyle ou aryle sulfonates, sulfates, phosphates, ou sulfosuccinates associés à un contre ion comme un ion ammonium (NH₄⁺), un ammonium quaternaire tel que tétrabutylammonium, et les cations alcalins tels que Na⁺, Li⁺ et K⁺. A titre de tensioactifs anioniques, il est, par exemple, possible d'utiliser le paratoluènesulfonate de tetraéthylammonium, le dodécylsulfate de sodium, le palmitate de sodium, le stéarate de sodium, le myristate de sodium, le di(2-éthylhexyl) sulfosuccinate de sodium, le méthylbenzène sulfonate et l'éthylbenzène sulfonate.

Les tensioactifs cationiques sont des tensioactifs dont la partie hydrophile est chargée positivement, notamment choisis parmi les ammoniums quaternaires comportant au moins une chaîne aliphatique en C₄-C₂₂ associés à un contre ion anionique choisi notamment parmi les dérivés du bore tels que le tétrafluoroborate ou les ions halogénures tels que F⁻, Br⁻, I⁻ ou Cl⁻. A titre de tensioactifs cationiques, il est, par exemple, possible d'employer le chlorure tétrabutyl-ammonium, le chlorure tetradécyl-ammonium, le bromure de tetradécyl-triméthyl-ammonium (TTAB), le bromure de cétyl-triméthyl-ammonium (CTAB), le bromure d'octadecyl-triméthyl-ammonium, le bromure de hexadecyl-triméthyl-ammonium, les halogénures d'alkylpyridinium portant une chaîne aliphatique et les halogénures d'alkylammonium.

Les tensioactifs zwittérioniques sont des composés neutres possédant des charges électriques formelles d'une unité et de signe opposés, notamment choisis parmi les composés présentant une chaîne alkyle en C₅-C₂₀ substituée généralement par une fonction chargée négativement comme un sulfate ou un carboxylate et une fonction chargée positivement comme un ammonium. A titre de tensioactifs zwittérioniques, on peut citer le N,N diméthyl-dodécyl-ammoniumbutanate de sodium, le diméthyl-dodécyl-ammonium propanate de sodium et les acides aminés.

Les tensioactifs amphotères sont des composés se comportant à la fois comme un acide ou comme une base selon le milieu dans lequel ils sont placés. A titre de tensioactifs amphotères, il est possible d'utiliser le lauroamphodiacétate de disodium et les bétaïnes comme l'alkylamidopropylbétaïne ou la laurylhydroxysulfobétaïne.

Les tensioactifs non-ioniques (ou neutres) sont des composés dont les propriétés tensioactives, notamment l'hydrophilie, sont apportées par des groupements fonctionnels non chargés tels qu'un alcool, un éther, un ester ou encore une amide, contenant des hétéroatomes tels que l'azote ou l'oxygène. En raison de la faible contribution hydrophile de ces fonctions, les composés tensioactifs non-ioniques sont le plus souvent polyfonctionnels. A titre de tensioactifs non-ioniques, il est possible d'employer les polyéthers comme les tensioactifs polyéthoxylés tels que par exemple le lauryléther de polyéthylèneglycol (POE23 ou Brij® 35), les polyols (tensioactifs dérivés de sucres) en particulier les alkylates de glucose tels que par exemple l'hexanate de glucose ou les copolymères à blocs tels que le pluronic F127®.

Dans le cadre de la présente invention, le (ou les) tensioactif(s) mis en oeuvre sont avantageusement choisi(s) parmi les tensioactifs anioniques et les tensioactifs cationiques et, plus particulièrement, parmi les tensioactifs cationiques.

Le(ou les) tensioactif(s) mis en oeuvre lors de l'étape (a) est(sont) présent(s) dans la solution de l'étape (a) en un rapport massique par rapport à la masse totale de la solution, compris entre 0,1% et 90%, notamment entre 1 et 50% et, en particulier, de l'ordre de 10% (i.e. 10% ± 5%).

Enfin, le verre macroporeux tel que précédemment défini est présent dans la solution préparée à l'étape (a) du procédé selon l'invention en une quantité comprise entre 10 et 600 g/L de solution, notamment entre 50 et 400 g/L de solution et, en particulier, entre 100 et 200 g/L de solution.

Plusieurs variantes sont envisageables lors de l'étape (a) du procédé de l'invention. En effet, il est possible de :
a₁) préparer la solution de l'étape (a) en mélangeant ensemble les différents éléments qu'elle comprend puis éventuellement en modifier le pH afin de la rendre alcaline ;
a₂) préparer une première solution comprenant au moins un tensioactif éventuellement en modifier le pH pour la rendre alcaline puis y ajouter le verre macroporeux et éventuellement modifier le pH de la solution ainsi obtenue afin de la rendre alcaline ou
a₃) préparer une première solution comprenant le verre macroporeux éventuellement en modifier le pH pour la rendre alcaline puis y ajouter au moins un tensioactif et éventuellement modifier le pH de la solution ainsi obtenue afin de la rendre alcaline.

Avantageusement, l'étape (a) du procédé selon l'invention consiste à préalablement préparer une première solution comprenant au moins un tensioactif éventuellement en modifier le pH pour la rendre alcaline puis y ajouter le verre macroporeux et éventuellement modifier le pH de la solution ainsi obtenue afin de la rendre alcaline (variante (a₂) ci-dessus). Plus particulièrement, l'étape (a) du procédé selon l'invention consiste à préalablement préparer une première solution, ci-après désignée solution (S₁), comprenant au moins un tensioactif, à modifier le pH de cette première solution pour la rendre alcaline puis y ajouter le verre macroporeux.

De façon avantageuse, la solution (S₁) tout comme la solution préparée à l'étape (a) ont, comme solvant, de l'eau éventuellement en mélange avec un alcool simple, tel que du méthanol, de l'éthanol ou un de leurs mélanges. L'eau utilisée peut être de l'eau de distribution, de l'eau désionisée, de l'eau distillée, acidifiées ou basiques. Ainsi, la solution (S₁) est une solution aqueuse comprenant un (ou plusieurs) tensioactif(s différents).

Le (ou les) tensioactif(s) peu(ven)t être introduit(s) dans la solution (S₁) sous forme solide ou sous forme liquide. Lorsque plusieurs tensioactifs différents sont utilisés, ils peuvent être mélangés en une fois ou être ajoutés les uns après les autres ou par groupe. Le mélange et l'éventuelle dissolution du (ou des) tensioactif(s) dans la solution (S₁) sont effectués sous agitation en utilisant un agitateur, un barreau magnétique, un bain à ultrasons ou un homogénéisateur, et peut être mis en oeuvre à une température comprise entre 10 et 40°C, avantageusement entre 15 et 30°C et, plus particulièrement, à température ambiante (i.e. 23°C ± 5°C) et ce, pendant une durée comprise entre 5 min et 2 h, notamment entre 15 min et 1 h et, en particulier, durant de l'ordre de 30 min (i.e. 30 min ± 10 min).

Une fois ce 1^{er} mélange effectué, le (ou les) sel(s) permettant de modifier le pH de la solution (S₁) et de la rendre alcaline est(sont) ajouté(s), dans cette dernière, sous forme solide ou sous forme liquide et en une quantité adéquate. Lorsque plusieurs sels différents sont utilisés, ils peuvent être ajoutés à la solution (S₁) en une fois ou être ajoutés les uns après les autres ou par groupe. La solution résultante est mélangée de façon à être homogène. Cette 2^{nde} étape de mélange est réalisée en utilisant un agitateur, un barreau magnétique, un bain à ultrasons ou un homogénéisateur, et peut être mise en oeuvre à une température comprise entre 10 et 40°C, avantageusement entre 15 et 30°C et, plus particulièrement, à température ambiante (i.e. 23°C ± 5°C) et ce, pendant une durée comprise entre 15 s et 15 min et notamment entre 30 s et 5 min. Puis, le verre macroporeux est ajouté à la solution alcaline résultante comprenant au moins un tensioactif moyennant quoi la solution de l'étape (a) est préparée. Une étape additionnelle de mélange identique à l'une des deux étapes de mélange précédemment décrites est également envisageable, après l'ajout du verre macroporeux.

L'étape (b) du procédé selon l'invention consiste à soumettre la solution alcaline préparée à l'étape (a) i.e. contenant au moins un tensioactif et le verre macroporeux à une synthèse pseudomorphe.

A cet effet, la solution alcaline préparée à l'étape (a) est soumise à un traitement thermique à une température supérieure ou égale à 60°C, notamment à une température comprise entre 70°C et 160°C, en particulier, à une température comprise entre 80°C et 130°C et, plus particulièrement, à une température de l'ordre de 100°C (i.e. 100°C ± 15°C).

L'homme du métier saura déterminer la durée de l'étape (b) du procédé selon l'invention, notamment en fonction des autres paramètres de la synthèse pseudomorphe tels que la température de réaction et la concentration en base. L'étape (b) du procédé selon l'invention est avantageusement mise en oeuvre dans une autoclave ou sous reflux et ce, pendant une durée supérieure à 15 min, notamment comprise entre 30 min et 10 h, notamment entre 1 h et 5 h et, en particulier, de l'ordre de 3 h (i.e. 3 h ± 1 h et notamment 3 h ± 30 min).

De plus, l'étape (b) du procédé selon l'invention peut être effectuée sous agitation en utilisant un agitateur, un barreau magnétique, un bain à ultrasons ou un homogénéisateur.

Toute technique permettant de récupérer le verre à porosité bimodale, macroporeuse et mésoporeuse, obtenu lors de l'étape (b) peut être mise en oeuvre lors de l'étape (c) du procédé selon l'invention. Avantageusement, cette étape (c) vise, d'une part, à séparer le verre à porosité bimodale de la solution mise en oeuvre lors des étapes (a) et (b) et, d'autre part, à éliminer le (ou les) tensioactif(s) associé(s) à un tel verre. Ainsi, l'étape (c) du procédé selon l'invention met en oeuvre une ou plusieurs étapes, identiques ou différentes, choisies parmi les étapes de filtration, de centrifugation, de sédimentation, de calcination, de séchage et de lavage. Dans un mode de réalisation particulier, l'étape (c) du procédé selon l'invention comprend au moins une étape de filtration, au moins une étape de lavage, au moins une étape de séchage et au moins une étape de calcination.

La (ou les) étape(s) de filtration est(sont) effectuée(s) sous vide et notamment en utilisant un appareillage du type Büchner avec éventuellement des membranes de cellulose, des membranes de téflon ou des filtres papier en crêpe plissé présentant un seuil de filtration qui sera choisi en fonction de la taille du verre macroporeux initialement mis en oeuvre. Ce seuil de filtration peut être de l'ordre du nm ou du µm.

La (ou les) étape(s) de lavage est(sont) effectuée(s) dans un solvant polaire. Lorsque l'étape de récupération met en oeuvre plusieurs lavages, un même solvant polaire est utilisé pour plusieurs voire pour tous les lavages ou plusieurs solvants polaires différents sont utilisés à chaque lavage. Par « solvant polaire », on entend, dans le cadre de la présente invention, un solvant choisi dans le groupe constitué par l'eau, l'eau désionisée, l'eau distillée, acidifiées ou basiques, l'acide acétique, les solvants hydroxylés comme le méthanol et l'éthanol, les glycols liquides de faible poids moléculaire tels que l'éthylèneglycol, le diméthylsulfoxyde (DMSO), l'acétonitrile, l'acétone, le tétrahydrofurane (THF) et leurs mélanges. Avantageusement, le solvant polaire mis en oeuvre dans la (ou les) étape(s) de lavage est de l'acétone.

La (ou les) étape(s) de séchage peu(ven)t être mise(s) en oeuvre dans un four ou dans une étuve et ce à une température comprise entre 50°C et 150°C, notamment comprise entre 60°C et 130°C et, en particulier, à une température de l'ordre de 80°C (80°C ± 10°C) et typiquement pendant une durée comprise entre 30 h et 15 j, notamment entre 3 j et 10 j et, en particulier, pendant 1 semaine.

La (ou les) étape(s) de calcination peu(ven)t être mise(s) en oeuvre sous air ou sous ozone et ce, à une température inférieure ou égale à 500°C, notamment à une température comprise entre 300°C et 480°C, en particulier comprise entre 350°C et 450°C et, tout particulièrement, à une température de l'ordre de 400°C (i.e. 400°C ± 20°C) et typiquement pendant une durée comprise entre 1 h et 10 h, notamment entre 2 h et 7 h et, en particulier, durée d'environ 4 h (i.e. 4 h ± 30 min).

La présente invention concerne également un procédé pour éliminer, retenir, fixer ou isoler un composé présent dans un fluide en utilisant le verre à porosité bimodale préparé conformément au procédé décrit ci-dessus.

Plus particulièrement, la présente invention concerne un procédé pour fixer au moins un composé éventuellement contenu dans un fluide, ce procédé comprend les étapes consistant à :
i) préparer un verre à porosité bimodale, macroporeuse et mésoporeuse par un procédé tel que précédemment défini ;
ii) éventuellement fonctionnaliser le verre préparé lors de l'étape (ii) ; et
iii) mettre en contact ledit fluide avec le verre à porosité bimodale, macroporeuse et mésoporeuse, éventuellement fonctionnalisé moyennant quoi, s'il est présent, ledit au moins un composé est immobilisé sur et/ou dans ledit verre.

Dans le cadre de la présente invention, on entend par « composé » aussi bien un composé non souhaité comme un polluant ou un contaminant qu'un composé d'intérêt (pharmaceutique, cosmétique ou industriel...) susceptible d'être présent ou présent dans un fluide.

Le composé peut être un composé organique ou inorganique, porteur ou non d'une (ou plusieurs) charge(s), moléculaire ou particulaire. Le composé peut être d'origine biologique ou d'origine chimique. Ledit composé peut être présent dans le fluide sous forme dissoute, sous forme de colloïdes, sous forme d'agrégats de matières notamment de matières organiques ou sous forme de complexes notamment anioniques ou cationiques.

Ainsi, le composé peut être choisi parmi le NO₂, le CO, un phénol, un insecticide, un pesticide, un composé organique volatil tel que un adhéhyde, du formaldéhyde, de l'acétaldéhyde, du naphtalène, une amine primaire notamment aromatique, de l'indole, du scatole, du tryptophane, de l'urobilinogène, du pyrrole, du benzène, l'éthylbenzène, du toluène, un xylène, du styrène, du napthalène, un composé halogéné, un radionucléide, un métal ou un isotope radioactif dudit métal, une molécule d'intérêt biologique, une molécule d'intérêt pharmacologique, une toxine, un glucide, un peptide, une protéine, une glycoprotéine, une enzyme, un substrat enzymatique, une hormone, un anticorps polyclonal ou monoclonal, un fragment d'anticorps, une molécule nucléotidique, un polluant, avantageusement organique, de l'eau ou de l'air, une bactérie et un virus.

Le composé peut être présent dans le fluide sous forme très diluée ou beaucoup plus concentrée. Ainsi, la quantité dudit composé dans le fluide est comprise entre 1 µg à 100 g /litre de fluide.

Dans le cadre de la présente invention, on entend par « fluide » un gaz ou un liquide. Plus particulèrement, un tel fluide peut être choisi parmi un fluide biologique ; un prélèvement dans un milieu de culture ou dans un réacteur de culture biologique comme une culture cellulaire d'eucaryotes supérieurs, de levures, de champignons ou d'algues; un liquide obtenu à partir d'une (ou plusieurs) cellule(s) animale(s) ou végétale(s) ; un liquide obtenu à partir d'un tissu animal ou végétal ; un prélèvement dans une matrice alimentaire; un prélèvement dans un réacteur chimique; de l'eau de ville, de rivière, d'étang, de lac, de mer, d'un aquarium, de refroidissement des systèmes de climatisation ou de tours aéro-réfrigérées ; un produit notamment liquide, un effluent ou de l'eau usée provenant notamment d'élevages intensifs ou d'industries ou d'installations du domaine chimique, pharmaceutique, cosmétique ou nucléaire; un produit pharmaceutique; un produit cosmétique ; un parfum ; ou un de leurs mélanges. De façon plus générale, la présente invention concerne un dispositif et un procédé s'appliquant à tout fluide gazeux ou liquide dans lequel au moins un composé doit en être extrait ou détecté.

Le fluide biologique est avantageusement tout fluide naturellement sécrété ou excrété d'un végétal ou d'un corps humain ou animal ou tout fluide récupéré, à partir d'un végétal ou d'un corps humain ou animal, par toute technique connue de l'homme du métier telle qu'une extraction, un prélèvement ou un lavage. Les étapes de récupération et d'isolement de ces différents fluides à partir du corps humain ou animal sont réalisées préalablement à la mise en oeuvre du procédé selon l'invention.

Toutes les formes de réalisation et variantes décrites dans le cadre du procédé de préparation d'un verre à porosité bimodale, macroporeuse et mésoporeuse, selon l'invention s'appliquent également à l'étape (i) du procédé selon l'invention.

L'étape (ii) est optionnelle et peut être mise en oeuvre pour accroître l'affinité du verre à porosité bimodale pour le composé à fixer, par comparaison à l'affinité du verre à porosité bimodale sans fonctionnalisation. Par « fonctionnaliser le verre à porosité bimodale », on entend donc la mise en oeuvre d'un protocole chimique pour greffer, de façon covalente et de façon directe ou indirecte, un réactif au niveau de la surface du verre à porosité bimodale, macroporeuse et mésoporeuse et notamment au niveau de la surface à l'intérieur des pores de ce verre.

Le réactif utilisé pour fonctionnaliser le verre à porosité bimodale mis en oeuvre dans le cadre de la présente invention est capable de former avec le composé à fixer une paire de liaison, ce réactif et le composé correspondant aux deux partenaires de cette paire de liaison. Les liaisons mises en oeuvre dans la liaison composé-réactif sont soit des liaisons non covalentes et de faible énergie telles que des liaisons hydrogène ou des liaisons de Van der Waals, soit des liaisons de forte énergie de type liaisons covalentes. Par conséquent, la fixation ou l'immobilisation du composé dans et/ou sur le verre et notamment à l'intérieur des pores du verre à porosité bimodale, lors de l'étape (iii) du procédé selon l'invention implique des liaisons qui peuvent être des liaisons non covalentes et de faible énergie et/ou des liaisons de forte énergie.

Le réactif utilisé est donc dépendant du composer à fixer. En fonction de cet analyte, l'homme du métier saura, sans effort inventif, choisir le réactif le mieux adapté. Ce réactif peut être choisi dans le groupe constitué par un groupement chimique apte à former une paire de liaison avec le composé ou une molécule portant au moins un groupement chimique apte à former une paire de liaison avec le composé. La molécule portant au moins un groupement chimique apte à former une paire de liaison avec le composé peut être complexe du type polymère. Plus particulièrement, ce réactif est choisi dans le groupe constitué par les fonctions hydroxyle, thiol, azide, époxyde, azyridine, amine, phosphine, phosphonate, oxyde de phosphine, oxime amide, carbamate, nitrile, isocyanate, thiocyanate, nitro, amide, halogénure notamment halogénure d'alkyle, acide carboxylique et ester; une molécule-sonde; un glucide; un peptide ; une protéine ; une glycoprotéine ; une enzyme ; un substrat enzymatique ; une toxine; un anticorps polyclonal ou monoclonal ; un fragment d'anticorps ; une molécule nucléotidique ; un acide nucléique peptidique et un aptamère tel qu'un aptamère ADN ou un aptamère ARN et une (nano)particule de ferrocyanure.

Le réactif peut être fixé ou greffé, de façon covalente et de façon directe ou indirecte, au niveau de la surface du verre à porosité bimodale, macroporeuse et mésoporeuse et notamment au niveau de la surface à l'intérieur des pores de ce verre. Lorsque la fixation est directe, une liaison covalente relie un atome du réactif et un atome du verre. Au contraire, lorsqu'elle est indirecte, la fixation met en oeuvre un bras de liaison (ou bras espaceur ou agent de jonction ou agent de liaison) généralement organique, ce dernier présentant un 1^{er} atome impliqué dans une liaison covalente avec un atome du verre et un 2^{nd} atome, distinct du 1^{er}, impliqué dans une liaison covalente avec un atome du réactif. A titre d'exemple de bras de liaison, on peut citer -(PEG)ₙ- et -(CH₂)ₙ- avec n représentant un nombre entier de 1 à 20 et PEG représentant un motif polyéthylène glycol.

La fonctionnalisation lors de l'étape (ii) du procédé selon l'invention tire profit de la présence de groupements silanols à la surface du verre à porosité bimodale et, de fait, peut mettre en oeuvre des réactions de silanisation utilisant des alcoxysilanes. La partie expérimentale ci-après présente deux exemples de fonctionnalisation notamment inspirés des documents **[9-10]**. L'homme du métier connaît différents autres protocoles utilisables pour fonctionnaliser la surface du verre à porosité bimodale et notamment la surface à l'intérieur des pores que présente ce verre.

La mise en contact lors de l'étape (iii) peut être mise en oeuvre de différentes façons en fonction de la nature gazeuse ou liquide du fluide susceptible de contenir le composé à fixer. Différentes variantes peuvent être utilisées pour la mise en contact lors de l'étape (iii) du procédé selon l'invention. Ainsi, on peut plonger le verre selon l'invention dans le fluide liquide, déposer sur ledit verre un certain volume de fluide liquide, mettre ledit verre en présence du fluide gazeux (expositions statiques) ou faire circuler le fluide notamment gazeux sur ledit verre (exposition dynamique).

Dans certaines de ces variantes, il peut être avantageux de conditionner le verre à porosité bimodale selon l'invention notamment sous forme de colonne dans laquelle le verre selon l'invention correspondant à un lit fluidisé dont le fluide liquide ou gazeux assure la fluidisation.

Dans le cas où le verre est plongé dans le fluide liquide, il peut être avantageux d'agiter le mélange ainsi obtenu puis de récupérer le verre par une quelconque des méthodes de récupération précédemment envisagées et ce, après un certain temps de contact.

Le temps de contact entre le fluide et le verre à porosité bimodale selon l'invention est variable et peut aller de 1 min à 3 j et, notamment de 5 min à 24 h et, en particulier, de 10 min à 12 h.

La présente invention concerne également un verre à porosité bimodale, macroporeuse et mésoporeuse, susceptible d'être préparé par un procédé de préparation tel que précédemment défini mais aussi un verre à porosité bimodale, macroporeuse et mésoporeuse, fonctionnalisé susceptible d'être obtenu suite à l'étape (ii) du procédé de fixation tel que précédemment défini.

Comme précédemment expliqué, les verres selon l'invention présentent des macropores dont le diamètre moyen est supérieur à 50 nm et notamment supérieur à 70 nm et des mésopores dont le diamètre moyen est compris entre 2 et 50 nm et notamment entre 2 et 20 nm. Avantageusement, les mésopores des verres selon l'invention se trouvent dans la couche à la surface (i.e. au niveau de la paroi) des macropores. Le verre selon l'invention fonctionnalisé présente, en plus, des réactifs tels que précédemment définis greffés, de façon covalente, directement ou indirectement, à la surface du verre et notamment à la surface interne des mésopores et/ou des macropores que présente ce verre.

Le verre à porosité bimodale selon l'invention se distingue principalement au niveau des pores du matériau d'origine à savoir le verre macroporeux. Cette différence entraîne des différences quant à la surface spécifique avec le verre à porosité bimodale selon l'invention présentant une surface spécifique au moins 2 fois supérieure, notamment au moins 5 fois supérieure et, en particulier, au moins 10 fois supérieure à la surface spécifique du verre macroporeux de départ.

Ainsi, comme expliqué dans **[7]**, le fait que le verre à porosité bimodale selon l'invention présente une surface spécifique élevée, un volume de pores important et des mésopores améliore la capacité de rétention, la perméabilité des colonnes de chromatographie et la sélectivité moléculaire dans les procédés de séparation.

La présente invention concerne enfin différentes utilisations de tels verres qui trouvent des applications dans des domaines très variés tels que le domaine de la décontamination, dans le domaine de la microbiologie, dans le domaine du diagnostic ou du traitement médical, dans le domaine du nucléaire, dans le domaine du contrôle qualité, dans le domaine de l'agro-alimentaire, dans le domaine du dépistage de substances illicites, dans le domaine de la défense et/ou de la biodéfense, dans le domaine du contrôle vétérinaire, environnemental et/ou sanitaire et/ou dans le domaine de la parfumerie, des cosmétiques et/ou des arômes.

A titre d'exemples plus particuliers, on peut notamment citer l'utilisation des verres selon l'invention dans le domaine de la catalyse, dans le domaine des détecteurs chimiques et dans le domaine de la chromatographie.

Dans le domaine de la catalyse, des catalyseurs moléculaires tels que catalyseurs moléculaires à base de platine, de ruthénium, d'iridium ou d'oxydes métalliques sont fixés sur un verre à porosité bimodale selon la présente invention, fonctionnalisé ou non, par mise en oeuvre du procédé de fixation tel que précédemment défini.

Un verre à porosité bimodale selon la présente invention, fonctionnalisé ou non est également utile comme phase stationnaire pour de la chromatographie et notamment de la chromatographie gazeuse, de la chromatographie sur couche mince, de la chromatographie d'affinité, de la chromatographie capillaire en phase gazeuse, de la chromatographie d'exclusion de taille, de la chromatographie en phase liquide à haute performance (HPLC pour « High Performance Liquid Chromatography »), de la HPLC chirale, de la HPLC en phase inverse (RP-HPLC pour « reverse Phase-HPLC) et de la séparation de protéines par RP-HPLC.

Dans le domaine des détecteurs chimiques, le verre à porosité bimodale selon la présente invention, fonctionnalisé ou non joue le rôle d'un tel détecteur et pour ce faire, il peut être avantageux de le fonctionnaliser par un réactif adapté au composé à détecter.

Les verres selon l'invention peuvent, en variante, être utilisés dans le domaine de la décontamination et notamment de la décontamination nucléaire ou de la décontamination radiologique. Pour ce faire, un verre à porosité bimodale selon la présente invention, fonctionnalisé ou non est utilisé pour fixer conformément au procédé de fixation de l'invention des polluants et contaminants contenus dans un fluide à décontaminer et notamment dans un fluide ou un effluent issus de l'industrie ou des installations nucléaires ou d'une industrie, d'un laboratoire, d'un hôpital, d'une clinique ou d'une installation mettant en oeuvre des radionucléides. Dans ce cas, le composé à fixer sur le verre selon l'invention est un radionucléide tel qu'un isotope radioactif du césium, du strontium, du cobalt, de l'argent, du ruthénium, du fer ou du thallium.

Une dernière utilisation des verres à porosité bimodale selon l'invention, fonctionnalisés ou non, appartient au domaine thérapeutique ou au domaine cosmétique. Dans cette utilisation, un composé présentant une activité thérapeutique préventive ou curative ou une activité à effet cosmétique du type activité hydratante, activité amincissante, activité anti-UV... est fixé au verre à porosité bimodale selon l'invention, fonctionnalisé ou non. Ce dernier appliqué sur la peau peut, en fonction de sa taille, soit rester à la surface de la peau, soit pénétrer dans le derme et, dans les deux cas, un relarguage du composé à activité thérapeutique ou à effet cosmétique peut être obtenu. Ainsi, la présente invention concerne un verre à porosité bimodale selon la présente invention, fonctionnalisé ou non, pour utilisation dans le domaine médical.

D'autres caractéristiques et avantages de la présente invention apparaîtront encore à l'homme du métier à la lecture des exemples ci-dessous donnés à titre illustratif et non limitatif, en référence aux figures annexées.

### BRÈVE DESCRIPTION DES DESSINS

La Figure 1 présente le volume d'azote V₀ adsorbé exprimé en cm³/g en fonction de P/P₀ avec P représentant la pression partielle d'azote et P₀ la pression maximale adsorbée, lors de la mesure de la porosité par un appareil BET.
La Figure 2 présente des images en microscopie électronique à balayage (MEB) du verre macroporeux initial (Figure 2A) et du matériau à porosité bimodale obtenu par synthèse pseudomorphe mais dont seule la macroporosité est visible par MEB (Figure 2B).

### EXPOSÉ DÉTAILLÉ DE MODES DE RÉALISATION PARTICULIERS

### I. Synthèse pseudomorphe sur des verres de type Vycor®.

Les verres de type Vycor® fournis par VitraBio Trisopor présentent une taille de pores de 105 nm et une surface spécifique de 16 m².g⁻¹.

La synthèse des verres pseudomorphes est inspirée de la publication **[6]**.

Typiquement, on dissout 1,2 g de bromure de cétyl-triméthyl-ammonium (CTAB) dans 11,9 ml d'eau, en agitant pendant 30 min, puis on ajoute 0,33 g de NaOH au mélange et on agite jusqu'à ce que le mélange soit homogène. Dans un autoclave, on ajoute les 2 g de verre poreux avec une taille de pores de 105 nm à la solution précédente et on place le tout à 100°C pendant 3 h.

Le produit est ensuite filtré sur Büchner, lavé à l'acétone, séché à 80°C pendant 1 nuit et enfin calciné à 400°C pendant 4 h. Le solide obtenu présente une surface spécifique de 200 m².g⁻¹ (à comparer aux 16 m².g⁻¹ du verre de départ).

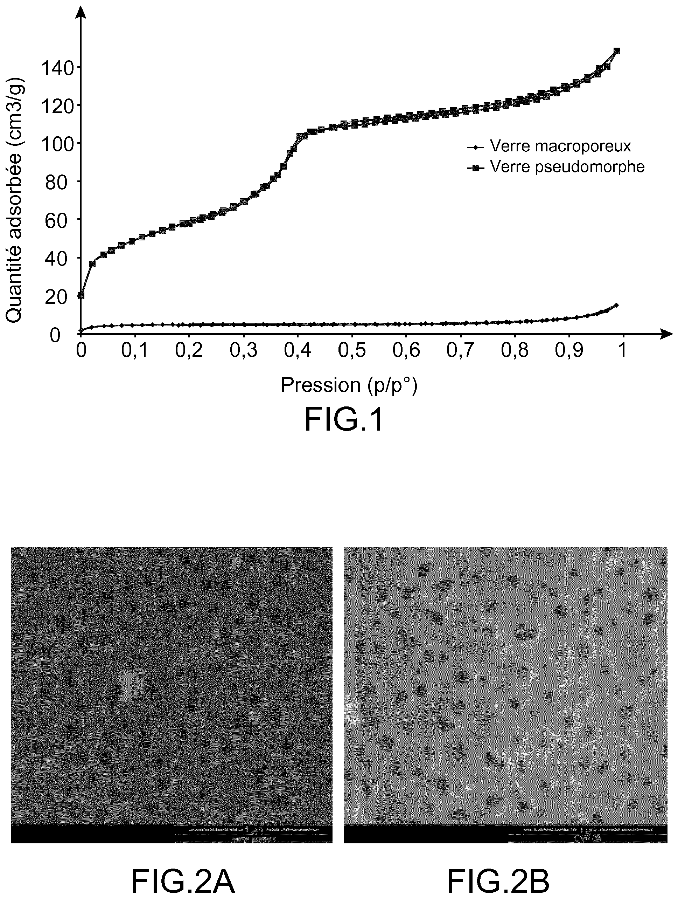

Par ailleurs, la porosité du matériau est répartie en deux familles de pores. L'une est constituée de mésopores centrées sur 4 nm, comme le démontrent les mesures d'adsorption d'azote (Figure 1). L'autre est constituée de macropores centrés sur 100 nm comme le montrent les clichés de microscopie électronique à balayage (Figure 2B). Cette seconde famille de pores correspond à celle déjà présente dans le matériau de départ (Figure 2A).

### II. Application or.

Le verre pseudomorphe synthétisé au point I a été greffé par réaction de silanisation. La méthode de greffage classique sur silice consiste à faire réagir une molécule complexante liée à un groupement siloxane sur le groupement silanol du verre.

Le choix de la molécule greffée a été influencé par l'application visée, ici l'extraction d'or d'une solution aqueuse. Les thiols ayant une bonne affinité pour les métaux lourds **[9]**, les inventeurs ont choisi de greffer le (3-mercaptopropyl) triméthoxysilane. Après greffage, le solide obtenu possédait une capacité d'échange théorique de 0,5 milliéquivalents par gramme.

Une solution d'or concentrée à 2 mM a été préparée. Puis les inventeurs ont mis environ 200 mg de verre pseudomorphe greffé en contact avec 50 mL de cette solution à l'or sous agitation pendant toute une nuit.

Afin d'analyser les résultats obtenus, les inventeurs ont, dans le cas de l'or, utilisé l'UV-visible pour déterminer la concentration d'or restant dans l'eau, cette dernière étant inférieure à 0,05 mM. On obtient donc, avec ce verre pseudomorphe greffé, une extraction de l'or supérieure à 99%.

### III. Application césium.

Récemment, l'emploi de nanoparticules de ferrocyanure supportées sur verre poreux de type Vycor® a été décrit pour l'extraction du césium en solution **[10]**. Cette même synthèse a été employée pour supporter de telles nanoparticules sur le verre à porosité bimodale synthétisé au point I.

Un test de sorption du césium en batch a été effectué sur le verre à porosité bimodale supportant des nanoparticules de ferrocyanure ainsi obtenu. Pour cela, 10 mg de verre ont été mis en contact pendant 24 h avec 20 ml d'une solution de nitrate de césium (CsNO₃). Les solutions sont filtrées puis analysées avant et après sorption du césium par chromatographie ionique. Les concentrations initiale et finale obtenues pour le verre pseudomorphe supportant des nanoparticules de ferrocyanure sont respectivement de 14,9 ppm et 5,7 ppm. La quantité de césium extraite par gramme de verre pseudomorphe supportant des nanoparticules de ferrocyanure est de 0,14 mmol/g.

Le même essai a été effectué sur le verre parent du verre pseudomorphe supportant des nanoparticules de ferrocyanure i.e. le verre macroporeux comportant une surface spécifique de 16 m².g⁻¹ et un diamètre de pores de 105 nm. Sur cet échantillon, le même protocole de greffage a été effectué (greffage de nanoparticules d'hexacyanoferrate de cobalt) et le même essai d'extraction du césium utilisant du CsNO₃ dans 20 mL de solution pour 10 mg de solide. Les concentrations initiale et finale mesurées sont respectivement les suivantes : 14,9 ppm et 10,5 ppm, ce qui correspond à une capacité d'extraction de 0,07 mmol/g, soit de l'ordre de deux fois moins efficace que le même verre transformé par pseudomorphisme.

### RÉFÉRENCES

**[1]** Calmon, C., 1980, « Explosion hazards of using nitric acid in ion-exchange equipment », Chemical Engineering, vol. 87, pages 271-274.
**[2]** Pillay, K.K.S, 1986, « A review of the radiation stability of ion exchange materials », Journal of Radioanalytical and Nuclear Chemistry, vol. 102, n°1, pages 247-268.
**[3]** Nakanishi K., 1991, « Phase separation in gelling silica-organic polymer solution: systems containing poly(sodium styrenesulfonate) », Journal of the American Ceramic Society, vol. 74, pages 2518-2530.
**[4]** Demande de brevet US 2007/065356 au nom de Cabrera et Knoell publiée le 22 mars 2007.
**[5]** Demande de brevet US 2010/055000 au nom de Agilent Technologies Inc. publiée le 4 mars 2010.
**[6]** Martin et al., 2002, « Morphological control of MCM-41 by pseudomorphic synthesis », Angewandte Chemie International Edition, vol. 41, n°14, 2590-2592.
**[7]** Galarneau et al., 2006, « Controlling the Morphology of Mesostructured Silicas by Pseudomorphic Transformation: a Route Towards Applications », Advanced Functional Materials, vol. 16, n°13, 1657-1667.
**[8]** Thèse de Doctorat de Frédéric Goettmann, « Matériaux hybrides mésoporeux en catalyse : du matériau support au système catalytique », soutenue le 21 septembre 2005, pages 129-133.
**[9]** Liu et al., 2000, « A new class of hybrid materials with functionalized organic monolayers for selective adsorption of heavy metal ions », Chemical Communications, vol. 15, n°13, pages 1145-1146.
**[10]** Demande internationale WO 2010/133689 au nom de CEA, CNRS et Université de Montpellier publiée le 25 novembre 2010.

## Revendications

1. Procédé pour préparer un verre à porosité bimodale, macroporeuse et mésoporeuse, consistant à soumettre à une transformation pseudomorphe un verre macroporeux dont la macroporosité est la conséquence d'une démixion contrôlée suivie d'une attaque chimique, **caractérisé en ce que** ledit procédé comprend les étapes consistant à :
a) préparer une solution alcaline comprenant au moins un tensioactif et ledit verre macroporeux ;
b) soumettre, pendant une durée comprise entre 15 min et 10 h, la solution préparée à l'étape (a) à un traitement thermique permettant la transformation pseudomorphe dudit matériau macroporeux ;
c) récupérer le verre traité obtenu à l'étape (b) et rendre accessible la porosité bimodale, mésoporeuse et macroporeuse dudit verre.

2. Procédé selon la revendication 1, **caractérisé en ce que** ladite solution alcaline présente un pH supérieur à 10, notamment supérieur à 11 et, en particulier, supérieur à 12.

3. Procédé selon la revendication 1 ou 2, **caractérisé en ce que**, dans ladite solution alcaline, le rapport molaire Base/SiO₂ est inférieur à 4, notamment inférieur à 1 et, en particulier, inférieur à 0,5.

4. Procédé selon l'une quelconque des revendications 1 à 3, **caractérisé en ce que** ledit tensioactif est choisi parmi les tensioactifs anioniques, les tensioactifs cationiques, les tensioactifs zwittérioniques, les tensioactifs amphotères et les tensioactifs non-ioniques.

5. Procédé selon l'une quelconque des revendications 1 à 4, **caractérisé en ce que** ladite étape (a) consiste à préalablement préparer une première solution comprenant au moins un tensioactif, à modifier le pH de cette première solution pour la rendre alcaline puis y ajouter le verre macroporeux.

6. Procédé selon l'une quelconque des revendications 1 à 5, **caractérisé en ce que**, lors de l'étape (b), la solution alcaline préparée à l'étape (a) est soumise à un traitement thermique à une température supérieure ou égale à 60°C, notamment à une température comprise entre 70°C et 160°C, en particulier, à une température comprise entre 80°C et 130°C et, plus particulièrement, à une température de l'ordre de 100°C (i.e. 100°C ± 15°C) et ce, pendant une durée comprise entre 1 h et 5 h et, en particulier, de l'ordre de 3 h (i.e. 3 h ± 1 h et notamment 3 h ± 30 min).

7. Procédé selon l'une quelconque des revendications 1 à 6, **caractérisé en ce que** ladite étape (c) met en oeuvre une ou plusieurs étapes, identiques ou différentes, choisies parmi les étapes de filtration, de centrifugation, de sédimentation, de calcination, de séchage et de lavage.

8. Procédé pour fixer au moins un composé éventuellement contenu dans un fluide, ce procédé comprend les étapes consistant à :
i) préparer un verre à porosité bimodale, macroporeuse et mésoporeuse par un procédé tel que défini à l'une quelconque des revendications 1 à 7 ;
ii) éventuellement fonctionnaliser le verre préparé lors de l'étape (i); et
iii) mettre en contact ledit fluide avec le verre à porosité bimodale, macroporeuse et mésoporeuse, éventuellement fonctionnalisé moyennant quoi, s'il est présent, ledit au moins un composé est immobilisé sur et/ou dans ledit verre.

9. Procédé selon la revendication 8, **caractérisé en ce que** ledit composé est choisi parmi le NO₂, le CO, un phénol, un insecticide, un pesticide, un composé organique volatil tel que un adhéhyde, du formaldéhyde, de l'acétaldéhyde, du naphtalène, une amine primaire notamment aromatique, de l'indole, du scatole, du tryptophane, de l'urobilinogène, du pyrrole, du benzène, l'éthylbenzène, du toluène, un xylène, du styrène, du napthalène, un composé halogéné, un radionucléide, un métal ou un isotope radioactif dudit métal, une molécule d'intérêt biologique, une molécule d'intérêt pharmacologique, une toxine, un glucide, un peptide, une protéine, une glycoprotéine, une enzyme, un substrat enzymatique, une hormone, un anticorps polyclonal ou monoclonal, un fragment d'anticorps, une molécule nucléotidique, un polluant, avantageusement organique, de l'eau ou de l'air, une bactérie et un virus.

10. Procédé selon la revendication 8 ou 9, **caractérisé en ce que** ledit fluide est choisi parmi un fluide biologique ; un prélèvement dans un milieu de culture ou dans un réacteur de culture biologique comme une culture cellulaire d'eucaryotes supérieurs, de levures, de champignons ou d'algues ; un liquide obtenu à partir d'une (ou plusieurs) cellule(s) animale(s) ou végétale(s) ; un liquide obtenu à partir d'un tissu animal ou végétal ; un prélèvement dans une matrice alimentaire ; un prélèvement dans un réacteur chimique ; de l'eau de ville, de rivière, d'étang, de lac, de mer, d'un aquarium, de refroidissement des systèmes de climatisation ou de tours aéro-réfrigérées ; un produit notamment liquide, un effluent ou de l'eau usée provenant notamment d'élevages intensifs ou d'industries ou d'installations du domaine chimique, pharmaceutique, cosmétique ou nucléaire; un produit pharmaceutique; un produit cosmétique; un parfum ; ou un de leurs mélanges.

11. Procédé selon l'une quelconque des revendications 8 ou 10, **caractérisé en ce que** ladite étape (ii) consiste à greffer, de façon covalente et de façon directe ou indirecte, un réactif au niveau de la surface du verre à porosité bimodale, macroporeuse et mésoporeuse et notamment au niveau de la surface à l'intérieur des pores de ce verre.

12. Procédé selon la revendication 11, **caractérisé en ce que** ledit réactif est choisi dans le groupe constitué par les fonctions hydroxyle, thiol, azide, époxyde, azyridine, amine, phosphine, phosphonate, oxyde de phosphine, oxime amide, carbamate, nitrile, isocyanate, nitro, amide, halogénure notamment halogénure d'alkyle, acide carboxylique et ester ; une molécule-sonde ; un glucide ; un peptide ; une protéine ; une glycoprotéine ; une enzyme; un substrat enzymatique; une toxine; un anticorps polyclonal ou monoclonal; un fragment d'anticorps; une molécule nucléotidique ; un acide nucléique peptidique et un aptamère tel qu'un aptamère ADN ou un aptamère ARN et une (nano)particule de ferrocyanure.

13. Verre à porosité bimodale, macroporeuse et mésoporeuse, susceptible d'être préparé par un procédé tel que défini à l'une quelconque des revendications 1 à 7.

14. Verre à porosité bimodale, macroporeuse et mésoporeuse, fonctionnalisé, susceptible d'être préparé lors de l'étape (ii) de la revendication 8.

15. Utilisation d'un verre selon la revendication 13 ou 14 dans le domaine de la catalyse, dans le domaine des détecteurs chimiques, dans le domaine de la chromatographie, dans le domaine de la décontamination et notamment de la décontamination nucléaire ou radiologique, ou dans le domaine cosmétique.

16. Verre selon la revendication 13 ou 14, pour utilisation dans le domaine médical.

## Patentansprüche

1. Verfahren zum Herstellen von Glas mit bimodaler, makroporöser und mesoporöser Porosität, das darin besteht, ein makroporöses Glas, dessen Makroporosität die Folge einer kontrollierten Entmischung mit anschließendem chemischen Ätzen ist, einer pseudomorphen Transformation zu unterwerfen, **dadurch gekennzeichnet, dass** das Verfahren die nachfolgenden Schritte umfasst:
a) Herstellen einer alkalischen Lösung, die zumindest ein Tensid und das makroporöse Glas enthält;
b) Unterwerfen der in Schritt (a) hergestellten Lösung einer Wärmebehandlung für einen Zeitraum zwischen 15 min und 10 h während der pseudomorphen Transformation des makroporösen Materials;
c) Gewinnen des in Schritt (b) erhaltenen behandelten Glases und Zugänglichmachen der bimodalen, mesoporösen und makroporösen Porosität des Glases.

2. Verfahren nach Anspruch 1, **dadurch gekennzeichnet, dass** die alkalische Lösung einen pH-Wert von über 10, insbesondere von über 11 und insbesondere von über 12 aufweist.

3. Verfahren nach Anspruch 1 oder 2, **dadurch gekennzeichnet, dass** in der alkalischen Lösung das Molverhältnis Base/SiO₂ unter 4, insbesondere unter 1 und insbesondere unter 0,5 beträgt.

4. Verfahren nach einem der Ansprüche 1 bis 3, **dadurch gekennzeichnet, dass** das Tensid ausgewählt ist aus anionischen Tensiden, kationischen Tensiden, zwitterionischen Tensiden, amphoteren Tensiden und nichtionischen Tensiden.

5. Verfahren nach einem der Ansprüche 1 bis 4, **dadurch gekennzeichnet, dass** der Schritt (a) darin besteht, zuvor eine erste Lösung herzustellen, die zumindest ein Tensid enthält, den pH-Wert dieser ersten Lösung zu modifizieren, um sie alkalisch zu machen, und dann das makroporöse Glas hinzuzufügen.

6. Verfahren nach einem der Ansprüche 1 bis 5, **dadurch gekennzeichnet, dass** in Schritt (b) die in Schritt (a) hergestellte alkalische Lösung einer Wärmebehandlung bei einer Temperatur höher oder gleich 60 °C, insbesondere bei einer Temperatur zwischen 70 °C und 160 °C, insbesondere bei einer Temperatur zwischen 80 °C und 130 °C, und insbesondere bei einer Temperatur in der Größenordnung von 100 °C (d. h. 100 °C ± 15 °C) für einen Zeitraum zwischen 1 h und 5 h, insbesondere in der Größenordnung von 3 h (d. h. 3 h ± 1 h, insbesondere 3 h ± 30 min) unterworfen wird.

7. Verfahren nach einem der Ansprüche 1 bis 6, **dadurch gekennzeichnet, dass** in Schritt (c) ein oder mehrere Schritte erfolgen, die identisch oder unterschiedlich sind und ausgewählt sind aus Schritten des Filterns, des Zentrifugierens, der Sedimentation, der Kalzinierung, des Trocknens und des Waschens.

8. Verfahren zum Binden zumindest einer gegebenenfalls in einem Fluid enthaltenen Verbindung, wobei dieses Verfahren nachstehende Schritte umfasst:
i) Herstellen von Glas mit bimodaler, makroporöser und mesoporöser Porosität mit einem Verfahren nach einem der Ansprüche 1 bis 7;
ii) gegebenenfalls Funktionalisieren von dem in Schritt (i) hergestellten Glas; und
iii) Inkontaktbringen des Fluids mit dem gegebenenfalls funktionalisierten Glas mit bimodaler, makroporöser und mesoporöser Porosität, wodurch die zumindest eine Verbindung, wenn vorhanden, an und/oder in dem Glas festgelegt wird.

9. Verfahren nach Anspruch 8, **dadurch gekennzeichnet, dass** die Verbindung ausgewählt ist aus NO₂, CO, Phenol, einem Insektizid, einem Pestizid, einer flüchtigen organischen Verbindung, wie Adhehyd, Formaldehyd, Acetaldehyd, Naphthalin, einem insbesondere aromatischen primären Amin, Indol, Skatol, Tryptophan, Urobilinogen, Pyrrol, Benzol, Ethylbenzol, Toluol, Xylol, Styrol, Naphthalin, einer halogenierten Verbindung, einem Radionuklid, einem Metall oder einem radioaktiven Isotop des Metalls, einem Molekül von biologischem Interesse, einem Molekül von pharmakologischem Interesse, einem Toxin, einem Kohlenhydrat, einem Peptid, einem Protein, einem Glycoprotein, einem Enzym, einem enzymatischem Substrat, einem Hormon, einem polyklonalen oder monoklonalen Antikörper, einem Antikörperfragment, einem Nukleotidmolekül, einem vorteilhaft organischen Schadstoff, Wasser oder Luft, einem Bakterium und einem Virus.

10. Verfahren nach Anspruch 8 oder 9, **dadurch gekennzeichnet, dass** das Fluid ausgewählt ist aus einem biologischen Fluid; einer Entnahme aus einem Kulturmedium oder einem Biokulturreaktor, wie einer Zellkultur von höheren Eukaryoten, Hefen, Pilzen oder Algen; einer aus einer oder mehreren Tier- oder Pflanzenzellen gewonnenen Flüssigkeit; einer aus einem Tier- oder Pflanzengewebe gewonnenen Flüssigkeit; einer Entnahme aus einer Lebensmittelmatrix; einer Entnahme aus einem chemischen Reaktor; Leitungswasser, Flusswasser, Teichwasser, Seewasser, Meerwasser, Aquariumwasser, Wasser aus der Abkühlung von Klimaanlagen oder luftgekühlten Türmen; einem insbesondere flüssigen Produkt, einem Abwasser oder Schmutzwasser insbesondere aus der Intensivtierhaltung oder der Industrie oder aus Anlagen im chemischen, pharmazeutischen, kosmetischen oder nuklearen Bereich; einem pharmazeutischen Produkt; einem kosmetischen Produkt; einem Parfüm; oder aus deren Gemischen.

11. Verfahren nach einem der Ansprüche 8 oder 10, **dadurch gekennzeichnet, dass** der Schritt (ii) darin besteht, ein Reagens kovalent und direkt oder indirekt an der Oberfläche des Glases mit bimodaler, makroporöser und mesoporöser Porosität und insbesondere an der Oberfläche innerhalb der Poren dieses Glases zu pfropfen.

12. Verfahren nach Anspruch 11, **dadurch gekennzeichnet, dass** das Reagens ausgewählt ist aus der Gruppe bestehend aus Hydroxyl-, Thiol-, Azid-, Epoxid-, Azyridin-, Amin-, Phosphin-, Phosphonat-, Phosphinoxid-, Oximamid-, Carbamat-, Nitril-, Isocyanat-, Nitro-, Amid-, Halogenid-, insbesondere Alkylhalogenid-, Carbonsäure- und Esterfunktionen; einem Sondenmolekül; einem Kohlenhydrat; einem Peptid; einem Protein; einem Glykoprotein; einem Enzym; einem enzymatischen Substrat; einem Toxin; einem polyklonalen oder monoklonalen Antikörper; einem Antikörperfragment; einem Nukleotidmolekül; einer Peptidnukleinsäure und einem Aptamer, wie einem DNA-Aptamer oder einem RNA-Aptamer und einem Ferrocyanid-(Nano)partikel.

13. Glas mit bimodaler, makroporöser und mesoporöser Porosität, das mit einem Verfahren nach einem der Ansprüche 1 bis 7 hergestellt werden kann.

14. Glas mit bimodaler, makroporöser und mesoporöser Porosität, das funktionalisiert ist und in dem Schritt (ii) aus Anspruch 8 hergestellt werden kann.

15. Verwendung von Glas nach Anspruch 13 oder 14 auf dem Gebiet der Katalyse, auf dem Gebiet chemischer Detektoren, auf dem Gebiet der Chromatographie, auf dem Gebiet der Dekontaminierung und insbesondere der nuklearen oder radiologischen Dekontaminierung oder auf dem Gebiet der Kosmetik.

16. Glas nach Anspruch 13 oder 14 zur Verwendung auf dem Gebiet der Medizin.

## Claims

1. A method for preparing a glass having bimodal macroporous and mesoporous porosity, consisting in submitting to a pseudomorphic transformationa macroporous glass, the macroporosity of which is the result of controlled demixing followed by chemical attack, **characterized in that** said method comprises the steps of:
a) preparing an alkaline solution comprising at least one surfactant and said macroporous glass;
b) subjecting, for a time of between 15 min and 10 h, the solution prepared at step (a) to heat treatment allowing the pseudomorphic transformation of said macroporous material;
c) recovering the treated glass obtained at step (b) and making accessible the bimodal mesoporous and macroporous porosity of said glass.

2. The method according to claim 1, **characterized in that** said alkaline solution has a pH higher than 10, in particular higher than 11 and more particularly higher than 12.

3. The method according to claim 1 or 2, **characterized in that** in said alkaline solution the Base/SiO₂ molar ratio is lower than 4, in particular lower than 1 and more particularly lower than 0.5.

4. The method according to any of claims 1 to 3, **characterized in that** said surfactant is selected from among anionic surfactants, cationic surfactants, zwitterionic surfactants, amphoteric surfactants and non-ionic surfactants.

5. The method according to any of claims 1 to 4, **characterized in that** said step (a) entails previously preparing a first solution comprising at least one surfactant, modifying the pH of this first solution so that it becomes alkaline, then adding the macroporous glass thereto.

6. The method according to any of claims 1 to 5, **characterized in that** at step (b) the alkaline solution prepared at step (a) is subjected to heat treatment at a temperature of 60°C or higher, in particular at a temperature of between 70°C and 160°C, more particularly at a temperature of between 80°C and 130°C and further particularly at a temperature of around 100°C (i.e. 100°C ± 15°C) for a time of between 1 h and 5 h and further particularly of around 3 h (i.e. 3 h ± 1 h and particularly 3 h ± 30 min).

7. The method according to any of claims 1 to 6, **characterized in that** said step (c) applies one or more steps, the same or different, selected from among the steps of filtration, centrifugation, sedimentation, calcining, drying and washing.

8. A method for immobilising at least compound which may be contained in a fluid, this method comprising the steps of:
i) preparing a glass having bimodal macroporous and mesoporous porosity such as defined in any of claims 1 to 7;
ii) optionally functionalising the glass prepared at step (i); and
iii) contacting said fluid with the optionally functionalised glass having bimodal macroporous and mesoporous porosity, whereby said at least one compound, if present, is immobilised on and/or in said glass.

9. The method according to claim 8, **characterized in that** said compound is selected from among NO₂, CO, a phenol, an insecticide, a pesticide, a volatile organic compound such as an aldehyde, formaldehyde, acetaldehyde, naphthalene, a primary amine particularly aromatic, indole, skatole, tryptophan, urobilinogen, pyrrole, benzene, ethylbenzene, toluene, xylene, styrene, naphthalene, a halide compound, a radionuclide, a metal or radioactive isotope of said metal, a molecule of biological interest, a molecule of pharmacological interest, a toxin, a carbohydrate, a peptide, a protein, a glycoprotein, an enzyme, an enzymatic substrate, an hormone, a polyclonal or monoclonal antibody, an antibody fragment, a nucleotide molecule, an advantageously organic pollutant of water or air, a bacterium or virus.

10. The method according to claim 8 or 9, **characterized in that** said fluid is selected from among a biological fluid; a sample from a culture medium or biological culture reactor such as a cell culture of higher eukaryotes, yeasts, fungi or algae; a liquid obtained from one or more animal or plant cell(s); a liquid obtained from animal or plant tissue; a food matrix sample; a sample from a chemical reactor; tap water, river water, pond water, lake water, sea water, aquarium water, cooling water from air-conditioning systems or cooling towers; a product in particular a liquid product, an effluent or wastewater particularly from intensive farming or from industries or plants in the chemical, pharmaceutical cosmetic or nuclear fields; a pharmaceutical product; a cosmetic product, a perfume, or one of the mixtures thereof.

11. The method according to any of claims 8 to 10, **characterized in that** said step (ii) consists of covalently grafting a reagent, either directly or indirectly, on the surface of the glass having bimodal macroporous and mesoporous porosity, and in particular on the surface inside the pores of this glass.

12. The method according to claim 11, **characterized in that** the said reagent is selected from the group consisting of hydroxyl, thiol, azide, epoxide, aziridine, amine, phosphine, phosphonate, phosphine oxide, oxime amide, carbamate, nitrile, isocyanate, nitro, amide, halide in particular alkyl halide, carboxylic acid and ester functions; a molecular probe; a carbohydrate; a peptide; a protein; a glycoprotein; an enzyme; an enzymatic substrate; a toxin; a polyclonal or monoclonal antibody; an antibody fragment; a nucleotide molecule; a peptide nucleic acid and an aptamer such as a DNA aptamer or RNA aptamer and a ferrocyanide (nano)particle.

13. Glass having bimodal macroporous and mesoporous porosity able to be prepared using a method such as described in any of claims 1 to 7.

14. Functionalised glass having bimodal macroporous and mesoporous porosity able to be prepared at step (ii) of claim 8.

15. The use of glass according to claim 13 or 14 in the field of catalysis, the field of chemical detectors, the field of chromatography, the field of decontamination and in particular nuclear or radiological decontamination, or in the cosmetic field.

16. The glass according to claim 13 or 14 for use in the medical field.
